# EUROPÄISCHE PATENTANMELDUNG

(11) **EP 4 265 405 A1**
(43) Veröffentlichungstag der Anmeldung: **25.10.2023**
(21) Anmeldenummer: 22169077.9
(22) Anmeldetag: 20.04.2022
(51) Int. Cl.: B32B 1/02, B32B 27/10, B32B 27/32, B32B 27/30, B32B 27/36, B32B 15/20, B32B 15/12, B32B 29/00, D21H 27/32

(54) **MEHRSCHICHTIGES TIEFZIEHFÄHIGES VERPACKUNGSMATERIAL**

(71) Anmelder: Schoeller Technocell GmbH & Co. KG, 49086 Osnabrück (DE)
(72) Erfinder: Fehlker, Andreas, 49074 Osnabrück (DE)
(74) Vertreter: Cohausz & Florack

(57) **Zusammenfassung**

Die Erfindung betrifft ein mehrschichtiges tiefziehfähiges Verpackungsmaterial mit einer Ober- und einer Unterseite, umfassend mindestens eine erste und eine zweite Papierschicht und mindestens eine Polymerschicht, wobei die mindestens eine erste und eine zweite Papierschicht durch die mindestens eine Polymerschicht miteinander verbunden sind, wobei die mindestens eine Polymerschicht mindestens ein wasserlösliches thermoplastisches Polymer enthält. Ein weiterer Gegenstand der Erfindung ist ein Verfahren zur Herstellung eines mehrschichtigen tiefziehfähigen Verpackungsmaterials, umfassend die folgenden Schritte: (a) Bereitstellen einer ersten Papierschicht; (b) Auftragen einer Polymerschicht auf die erste Papierschicht; (c) Verbinden der ersten Papierschicht mit der darauf aufgetragenen Polymerschicht mit einer zweiten Papierschicht, derart, dass sich die Polymerschicht zwischen der ersten und der zweiten Papierschicht befindet; oder (a') Bereitstellen einer zweiten Papierschicht; (b') Auftragen einer Polymerschicht auf die zweite Papierschicht; (c') Verbinden der zweiten Papierschicht mit der darauf aufgetragenen Polymerschicht mit einer ersten Papierschicht, derart, dass sich die Polymerschicht zwischen der ersten und der zweiten Papierschicht befindet; wobei die Polymerschicht in Schritt (b) mindestens ein wasserlösliches und thermoplastisches Polymer enthält. Ferner ist Gegenstand der Erfindung die Verwendung des erfindungsgemäßen mehrschichtigen tiefziehfähigen Verpackungsmaterials zur Herstellung von Verpackungen, insbesondere Lebensmittelverpackungen.

## Beschreibung

Gegenstand der Erfindung ist ein mehrschichtiges tiefziehfähiges Verpackungsmaterial, ein Verfahren zu dessen Herstellung, sowie die Verwendung des Verpackungsmaterials zur Herstellung von Verpackungen, insbesondere Lebensmittelverpackungen.

Im Bereich der bahnförmigen Verpackungsmaterialien kommen für viele Anwendungen papierbasierte Produkte zum Einsatz. Das geschieht häufig und bei geringen Anforderungen an die Barriereeigenschaften des Verpackungsmaterials ohne weitere Modifikationen, wie z.B. das Auftragen von synthetischen Polymerstrichen oder synthetischen Polymerfolien.

Mit Hilfe von synthetischen Polymerstrichen werden Verpackungspapieren Barriereeigenschaften gegenüber Sauerstoff, Wasserdampf, Öl, Fett und weiteren Stoffen verliehen. Die Anforderungen, die insbesondere die Lebensmittelindustrie an solche Verpackungsmaterialien stellt, sind, vor allen Dingen für sensible Produkte, sehr hoch und wurden bisher in der Regel durch das Einarbeiten von synthetischen Polymerstrichen, Polymerfolien oder Aluminiumfolien in das mehrschichtige Verpackungsmaterial erfüllt.

Die gesellschaftliche Entwicklung der vergangenen Jahre führte zu einem immer stärkeren Umdenken im Bereich der Verpackungsmaterialien. Eine Forderung des Marktes an die Hersteller von Verpackungsmaterialien besteht darin, nach Möglichkeit ökologischere und recyclingfähigere Materialien auf Basis von Papier und nachwachsenden Rohstoffen einzusetzen. Eine große Herausforderung für die Hersteller der Lebensmittelverpackungen ist es dabei die geforderten hohen Barriereeigenschaften zu erzielen und gleichzeitig ein besonders ökologisches und recyclingfähiges Verpackungsmaterial bereitzustellen.

Dies gilt auch und im Besonderen für Verpackungsmaterialien, die aufgrund der Anforderung an die Form des Verpackungsmaterials mittels Tiefziehverfahren verformt werden. Solche tiefziehfähigen Verpackungsmaterialien werden beispielsweise in der EP 2 586 606 A1 beschrieben und sind üblicherweise aus mindestens zwei Papierschichten aufgebaut, die mit einer Schicht aus einem thermoplastischen wasserunlöslichen Polymer verbunden sind. Unter Einwirkung von Druck und Temperatur wird das Verpackungsmaterial tiefgezogen und durch das thermoplastische wasserunlösliche Polymer bleibt die Form nach der Abkühlung erhalten. So können nach Auftragen einer zusätzlichen Barriereschicht aus einem ebenfalls wasserunlöslichen synthetischen Polymer, unter Anderem Schalen und Teller für Aufschnitt und andere Lebensmittel hergestellt werden.

Nachteilig an diesen tiefziehfähigen Verpackungsmaterialien ist, dass mindestens eine der grundsätzlich wasserlöslichen Papierschichten im mehrschichtigen tiefziehfähigen Verpackungsmaterial zwischen zwei synthetischen wasserunlöslichen Polymerschichten liegt. Hierdurch wird das Recycling des Verpackungsmaterials nach dessen Nutzung sehr aufwendig, so dass ein Recycling des Verpackungsmaterials praktisch nur mit hohem Kostenaufwand umsetzbar und aus diesem Grund unökonomisch ist. Im Ergebnis findet ein Recycling eines solchen tiefziehfähigen Verpackungsmaterials in der Praxis daher kaum statt.

Im Stand der Technik bekannte Lösungsansätze, die über eine Stanzkante an den Rändern des Verpackungsmaterials das Abziehen der synthetischen Polymerschicht ermöglichen sollen, haben sich als nicht praxistauglich herausgestellt. Zudem ermöglichen diese zwar theoretisch die Trennung des mehrschichtigen tiefziehfähigen Verpackungsmaterials, auf den grundsätzlichen Einsatz von synthetischen wasserunlöslichen Polymeren im Verpackungsmaterial kann jedoch nicht verzichtet werden. Auch kann ein solches tiefziehfähiges Verpackungsmaterial trotz Trennbarkeit der Einzelkomponenten weder einfach recycelt noch kompostiert werden.

Vor dem Hintergrund des Standes der Technik lag der Erfindung die Aufgabe zugrunde, ein mehrschichtiges tiefziehfähiges Verpackungsmaterial bereitzustellen, welches die Nachteile des Standes der Technik nicht aufweist und insbesondere die geforderten hohen Barriereeigenschaften für den Einsatz als Lebensmittelverpackung erfüllt und sich gleichzeitig einfach recyceln und gegebenenfalls kompostieren lässt.

Gelöst wurde diese Aufgabe durch ein mehrschichtiges tiefziehfähiges Verpackungsmaterial mit einer Ober- und einer Unterseite, umfassend mindestens eine erste und eine zweite Papierschicht und mindestens eine Polymerschicht, wobei die erste und zweite Papierschicht durch die mindestens eine Polymerschicht miteinander verbunden sind, dadurch gekennzeichnet, dass die mindestens eine Polymerschicht mindestens ein wasserlösliches thermoplastisches Polymer enthält.

Es hat sich überraschend herausgestellt, dass die Verwendung eines wasserlöslichen thermoplastischen Polymers in der die erste und zweite Papierschicht verbindenden mindestens einen Polymerschicht zu einem tiefziehfähigen Verpackungsmaterial führt, welches die geforderte hohe Stabilität für den Einsatz als Lebensmittelverpackung erfüllt und gleichzeitig aufgrund der Wasserlöslichkeit des eingesetzten thermoplastischen Polymers einfach zu recyceln ist. Insbesondere kann die Polymerschicht durch Wasser vollständig aufgelöst und die beiden Papierschichten somit einfach von dieser abgetrennt und der Wiederverwertung zugeführt werden.

Das erfindungsgemäße Verpackungsmaterial weist eine Ober- und eine Unterseite auf.

Als "Oberseite" des erfindungsgemäßen Verpackungsmaterials wird die Seite bezeichnet, die in der späteren Anwendung Kontakt zu dem zu verpackenden Produkt, beispielsweise einem Lebensmittel, aufweist. Die Oberseite des erfindungsgemäßen Verpackungsmaterials wird durch die mindestens eine erste Papierschicht gebildet.

Als "Unterseite" des erfindungsgemäßen Verpackungsmaterials wird die der Oberseite des erfindungsgemäßen Verpackungsmaterials gegenüberliegende Seite verstanden. Die Unterseite des erfindungsgemäßen Verpackungsmaterials wird durch die mindestens eine zweite Papierschicht gebildet und stellt in der späteren Anwendung die Verpackungsaußenseite dar. Diese kann gegebenenfalls zum Bedrucken ausgerüstet sein.

Das erfindungsgemäße mehrschichtige tiefziehfähige Verpackungsmaterial, umfasst mindestens eine erste und eine zweite Papierschicht. Unter einer Papierschicht, wird erfindungsgemäß eine Schicht aus Papier verstanden.

Papier im Sinne der Erfindung ist entweder ein Rohpapier oder ein gestrichenes Rohpapier. Unter dem Begriff Rohpapier wird hier ein unbeschichtetes oder oberflächengeleimtes Papier verstanden. Ein Rohpapier kann neben Zellstofffasern, Leimungsmittel wie Alkylkentendimere, Fettsäuren und/oder Fettsäuresalze, epoxydierte Fettsäureamide, Alkenyl- oder Alkylbernsteinsäureanhydrid, Nassfestmittel wie Polyamin-Polyamid-Epichlorhydrin, Trockenfestmittel wie anionische, kationische oder amphotere Polyamide oder kationische Stärken, optische Aufheller, Füllstoffe, Pigmente, Farbstoffe, Entschäumer und weitere in der Papierindustrie bekannte Hilfsmittel enthalten.

Das Rohpapier kann oberflächengeleimt sein. Hierzu geeignete Leimmittel sind beispielsweise Polyvinylalkohol oder oxydierte Stärke. Das Rohpapier kann auf einer Fourdrinier- oder einer Yankee-Papiermaschine(Zylinder-Papiermaschine) hergestellt werden. Das Flächengewicht des Rohpapiers beträgt vorzugsweise 30 bis 300 g/m², insbesondere 60 bis 250 g/m², besonders bevorzugt 100 bis 220 g/m², Das Rohpapier kann in unverdichteter oder verdichteter Form (geglättet) eingesetzt werden. Besonders gut geeignet sind Rohpapiere mit einer Dichte von 0,8 bis 1,2 g/cm³, vorzugsweise 0,90 bis 1,1 g/cm³.

Als Zellstofffasern können beispielsweise gebleichter Hartholz-Kraftzellstoff (LBKP), gebleichter Nadelholz-Kraftzellstoff (NBKP), gebleichter Laubholzsulfitzellstoff (LBSP) oder gebleichter Nadelholzsulfitzellstoff (NBSP) eingesetzt werden. Es können auch aus Papierabfällen gewonnene Zellstofffasern verwendet werden. Die genannten Zellstofffasern können auch als Mischung eingesetzt werden und ggf. Anteile anderer Fasern, zum Beispiel Kunstharzfasern, enthalten. Bevorzugt jedoch werden Zellstofffasern aus 100% Laubholzzellstoff eingesetzt. Die mittlere Faserlänge des ungemahlenen Zellstoffs beträgt vorzugsweise 0,6 mm bis 0,85 mm (Kajaani-Messung). Ferner weist der Zellstoff vorzugsweise einen Ligningehalt von weniger als 0,05 Gew.-% auf, insbesondere 0,01 bis 0,03 Gew.-%, bezogen auf die Masse des Zellstoffs. Als Füllstoff können beispielsweise Kaoline, Calciumcarbonat in seinen natürlichen Formen wie Kalkstein, Marmor oder Dolomitstein, gefälltes Calciumcarbonat, Calciumsulfat, Bariumsulfat, Titandioxid, Talkum, Silica, Aluminiumoxid und deren Gemische für das Rohpapier eingesetzt werden.

In einer weiteren Ausführungsform der Erfindung kann die Papierschicht aus einem gestrichenen Rohpapier bestehen. Bei einem gestrichenen Rohpapier ist auf mindestens einer Seite des Rohpapiers mindestens eine pigmenthaltige Schicht angeordnet. Als Pigment kann ein Metalloxid, Silikat, Carbonat, Sulfid oder Sulfat verwendet werden. Besonders gut geeignet sind Pigmente wie Kaoline, Talkum, Calciumcarbonat und/oder Bariumsulfat.

In einer weiteren Ausführungsform der Erfindung kann für die pigmenthaltige Schicht eine Pigmentmischung eingesetzt werden, die aus dem oben genannten Calciumcarbonat und Kaolin besteht. Das Mengenverhältnis Calciumcarbonat/Kaolin beträgt vorzugsweise 30:70 bis 70:30. Das Mengenverhältnis Bindemittel/Pigment in der pigmenthaltigen Schicht kann 0,1 bis 2,5, vorzugsweise 0,2 bis 1,5, insbesondere jedoch etwa 0,9 bis 1,3 betragen.

In der pigmenthaltigen Schicht kann jedes bekannte wasserlösliche und/oder wasserdispergierbare Bindemittel eingesetzt werden. Besonders geeignet sind hierzu neben Latexbindern filmbildende Stärken wie thermisch modifizierte Stärken, insbesondere Maisstärken oder hydroxypropylierte Stärken. Die pigmenthaltige Schicht kann mit allen in der Papierherstellung üblichen Auftragsaggregaten inline oder offline aufgebracht werden, wobei die Auftragsmenge vorzugsweise so gewählt wird, dass nach dem Trocknen das Auftragsgewicht 0,1 bis 30 g/m², insbesondere 1 bis 20 g/m², oder gemäß einer besonders bevorzugten Ausführungsform 2 bis 8 g/m² beträgt.

In einer bevorzugten Ausführungsform wird die pigmenthaltige Schicht mit einer innerhalb der Papiermaschine integrierten Leimpresse oder Filmpresse aufgetragen. Die Papierschicht basiert im Wesentlichen auf nachwachsenden Rohstoffen, wie Cellulose und Cellulose-Derivaten,

Das Papier und damit die Papierschicht kann ein Flächengewicht von 30 bis 300 g/m², insbesondere von 60 bis 250 g/m², besonders bevorzugt von 100 bis 220 g/m², aufweisen.

Gemäß einer bevorzugten Ausführungsform der Erfindung handelt es sich bei der mindestens einen ersten Papierschicht und der mindestens zweiten Papierschicht um ungestrichene Rohpapiere.

Gemäß einer alternativen bevorzugten Ausführungsform der Erfindung handelt es sich bei der mindestens einen ersten Papierschicht um ein ungestrichenes Rohpapier und bei der mindestens zweiten Papierschicht um ein gestrichenes Rohpapier.

Gemäß einer weiteren alternativen bevorzugten Ausführungsform der Erfindung handelt es sich bei der mindestens einen ersten Papierschicht und der mindestens zweiten Papierschicht um gestrichene Rohpapiere.

Das erfindungsgemäße Verpackungsmaterial umfasst mindestens eine Polymerschicht, wobei die erste und zweite Papierschicht durch die mindestens eine Polymerschicht miteinander verbunden sind, d.h. die mindestens eine Polymerschicht befindet sich im erfindungsgemäßen Verpackungsmaterial zwischen der ersten und der zweiten Papierschicht und weist, vorzugsweise einen vollflächigen, Kontakt zur ersten und zweiten Papierschicht auf.

Die mindestens eine Polymerschicht enthält mindestens ein wasserlösliches thermoplastisches Polymer. Dabei kann die mindestens eine Polymerschicht auch eine Mischung von wasserlöslichen thermoplastischen Polymeren enthalten.

Wasserlöslich im Sinne der Erfindung bedeutet, dass mindestens 25 % (m/m) Polymer in Wasser klar löslich sind, so dass optisch keine Trübung erkennbar ist. Insbesondere weisen die wasserlöslichen Polymere im pH-Bereich von 3 bis 11 eine Wasserlöslichkeit von mindestens 35 % (m/m), besonders bevorzugt mindestens 55 % (m/m), insbesondere mindestens 65 % (m/m), ganz besonders bevorzugt mindestens 75 % (m/m), insbesondere 100 % (m/m), auf. Alle Angaben zur Wasserlöslichkeit beziehen sich bei allen erfindungsgemäß verwendeten wasserlöslichen thermoplastischen Polymeren auf Standardbedingungen von 20±5 °C und Standardluftdruck von 1013,25 hPa. Die Angabe (m/m) bedeutet Massenanteile Polymer bezogen auf Massenanteile Wasser.

Unter einem thermoplastischen Polymer wird ein lineares oder verzweigtes Polymer verstanden, welches keine chemischen Vernetzungspunkte, d.h. kovalente Bindungen, zwischen einzelnen Polymerketten aufweist.

Ein thermoplastisches Polymer wird im Falle eines amorphen thermoplastischen Polymers oberhalb der Glasübergangstemperatur (Tg), im Falle eines (teil)kristallinen thermoplastischen Polymers oberhalb der Schmelztemperatur (Tm), prinzipiell fließfähig. Ein thermoplastisches Polymer kann daher im erweichten Zustand durch Pressen, Extrudieren, Spritzgießen oder andere Formgebungsverfahren zu Formteilen verarbeitet werden.

Eine Abgrenzung eines thermoplastischen Polymers (Thermoplast) von den beiden anderen großen Polymerklassen, den Elastomeren und den Duroplasten, welche beide chemische Vernetzungspunkte, d.h. kovalente Bindungen, zwischen einzelnen Polymerketten aufweisen, kann, wie der Fachmann weiß, über die abweichende Temperaturverlaufskurve des Schermoduls G (auch als Schubmodul G bekannt) erfolgen. Die Bestimmung des Schermoduls G in Abhängigkeit von der Temperatur kann mittels üblicher dem Fachmann bekannter Methoden, beispielsweise mittels dynamisch mechanisch thermischer Analyse (DMTA), durchgeführt werden.

Der Anteil des wasserlöslichen thermoplastischen Polymers in der mindestens einen Polymerschicht beträgt bevorzugt mindestens 90 Gew.-%, besonders bevorzugt mindestens 95 Gew.-%, ganz besonders bevorzugt 98 Gew.-%, insbesondere 99 Gew.-%, bezogen auf das Gesamtgewicht der Polymerschicht (atro). Gemäß einer besonders bevorzugten Ausführungsform der Erfindung besteht die Polymerschicht aus dem wasserlöslichen thermoplastischen Polymer.

Neben dem wasserlöslichen thermoplastischen Polymer kann die mindestens eine Polymerschicht bis zu 10 Gew.-%, vorzugsweise bis zu 5 Gew.-%, bevorzugt bis zu 2 Gew.-%, besonders bevorzugt bis zu 1 Gew.-%, ganz besonders bevorzugt 0 Gew.-%, weitere Bestandteile, bezogen auf das Gesamtgewicht der Polymerschicht (atro), enthalten. Weitere Bestandteile können übliche Additive sein, die den thermoplastischen Polymeren zur besseren Verarbeitbarkeit zugegeben werden.

Gemäß einer bevorzugten Ausführungsform der Erfindung weist das mindestens eine wasserlösliche und thermoplastische Polymer ein E-Modul von mindestens 0,3 GPa, vorzugsweise 0,5 GPa, besonders bevorzugt 0,8 GPa, auf. Das E-Modul steht mit dem Schermodul G in Beziehung und wird mittels Zugfestigkeitsprüfung mit dem Lorentzen & Wettre Tensile Tester, wie weiter hinten im Zusammenhang mit den Beispielen beschrieben, bestimmt. Es hat sich herausgestellt, dass die Tiefziehfähigkeit des erfindungsgemäßen Verpackungsmaterials verbessert ist, wenn dessen Polymerschicht mindestens ein wasserlösliches thermoplastisches Polymer enthält, das das oben genannte E-Modul aufweist.

Gemäß einer weiteren bevorzugten Ausführungsform der Erfindung ist das mindestens eine wasserlösliche und thermoplastische Polymer ein Biopolymer oder eine Mischung aus Biopolymeren, insbesondere ein Biopolymer ausgewählt aus modifizierten und natürlichen Biopolymeren sowie deren Mischungen. Wie hier verwendet wird unter einem Biopolymer ein Polymer verstanden, das aus nachwachsenden Rohstoffen hergestellt wurde (natürliches Biopolymer), in der Natur als Polymer vorkommt (natürliches Biopolymer) und in der Natur als Polymer vorkommt und nachträglich chemisch und/oder physikalisch modifiziert wurde (modifiziertes Biopolymer).

Bevorzugt ist das Biopolymer ausgewählt aus der Gruppe bestehend aus Polysacchariden, insbesondere thermoplastische Stärke (TPS), Polylactiden (PLA), Polyhydroxybutyraten (PHB), thermoplastischen Polymeren auf Ligninbasis, Polyvinylalkoholen (PVOH) und Ethylen-Vinylalkohol-Copolymeren (EVOH), auf Basis nachwachsender Rohstoffe, beispielsweise aus Rohrzucker, sowie deren Mischungen.

Das Verwenden eines Biopolymers als wasserlösliches thermoplastisches Polymer erhöht die Recyclingfähigkeit der erfindungsgemäßen Verpackung und erlaubt deren Kompostierbarkeit. Es versteht sich von selbst, dass sich diese Effekte mit zunehmendem Anteil des Biopolymers an dem mindestens einen wasserlöslichen thermoplastischen Polymer verstärken.

Gemäß einer besonders bevorzugten Ausführungsform der Erfindung liegt der Anteil an synthetischen Polymeren im Verpackungsmaterial unter 20 Gew.-%, bevorzugt unter 10 Gew.-%, besonders bevorzugt unter 5 Gew.-%, bezogen auf das gesamte Gewicht des Verpackungsmaterials (atro). Unter synthetischen Polymeren werden sowohl wasserlösliche thermoplastische Polymere auf Mineralölbasis verstanden, die keine Biopolymere sind, als auch andere konventionelle thermoplastische Polymere auf Mineralölbasis, die überwiegend nicht wasserlöslich sind.

Das Auftragsgewicht (atro) der mindestens einen Polymerschicht kann im erfindungsgemäßen Verpackungsmaterial im Bereich von 1 bis 50 g/m², insbesondere im Bereich von 10 bis 30 g/m², liegen.

Für manche Anwendung kann es wünschenswert sein die Barriereeigenschaften des erfindungsgemäßen Verpackungsmaterials zu verbessern. Dies kann im erfindungsgemäßen Verpackungsmaterial dadurch geschehen, dass auf der Oberseite des Verpackungsmaterials, die in der späteren Anwendung Kontakt zu dem verpackten Produkt hat, eine Funktionsschicht vorgesehen ist:
Eine Funktionsschicht kann beispielsweise eine Schicht aus einem wasserunlöslichen thermoplastischen Polymer, eine wasserunlösliche thermoplastische Polymerfolie oder eine Aluminiumfolie umfassen oder aus dieser bestehen.

Es hat sich für eine Verbesserung der Barriereeigenschaften des erfindungsgemäßen Verpackungsmaterials insbesondere als praxisgerecht erwiesen, wenn die Funktionsschicht eine Schicht aus einem wasserunlöslichen thermoplastischen Polymer oder einer wasserunlöslichen thermoplastischen Polymerfolie umfasst oder aus dieser besteht. Bevorzugt ist das wasserunlösliche synthetische Polymer oder die wasserunlösliche synthetische Polymerfolie ausgewählt aus der Gruppe bestehend aus PE, PP, PVOH, EVOH, PLA sowie deren Mischungen. Das Vorsehen einer Funktionsschicht ist insbesondere dann vorteilhaft, wenn das zu verpackende Gut, z.B. ein Lebensmittel, feucht ist, um ein Durchschlagen der Feuchtigkeit durch das Verpackungsmaterial und damit dessen Aufweichen zu verhindern. Gemäß einer bevorzugten Ausführungsform der Erfindung besteht das wasserunlösliche thermoplastische Polymer für die Funktionsschicht aus PE und/oder EVOH aus nachwachsenden Rohstoffen, beispielsweise aus Zuckerrohr. Dies ist vorteilhaft, da der Einsatz von fossilen Rohstoffen vermieden werden kann.

Wasserunlöslich im Sinne der Erfindung bedeutet, dass das wasserunlösliche thermoplastische Polymer bei 25 °C eine Wasserlöslichkeit von höchstens 2% (m/m), besonders bevorzugt 0 % (m/m), in Wasser aufweist.

Gemäß einer besonders bevorzugten Ausführungsform der Erfindung beträgt die Sauerstoffpermeation des Verpackungsmaterials nicht mehr als 15 cm³/m² in 24 Stunden, gemessen nach DIN 53380-3 bei einer Temperatur von 23°C, 50% relativer Luftfeuchtigkeit und einem Luftdruck von 1 atm. Dies führt vorteilhafter Weise zu einer verlängerten Haltbarkeit eines mit dem erfindungsgemäßen Verpackungsmaterial zu verpackenden Guts, z.B. eines Lebensmittels.

Gemäß einer weiteren besonders bevorzugten Ausführungsform der Erfindung beträgt die Wasserdampfpermeation des Verpackungsmaterials nicht mehr als 50 g/m² in 24 Stunden, gemessen nach EN ISO 15106-3 bei einer Temperatur von 23°C, 50% relativer Luftfeuchtigkeit und einem Luftdruck von 1 atm. Es hat sich herausgestellt, dass diese Ausführungsform des erfindungsgemäßen Verpackungsmaterials ein feuchtes zu verpackendes Gut, z.B. ein feuchtes Lebensmittel, vor Austrocknung schützt und andererseits ein trockenes zu verpackendes Gut, z.B. ein trockenes Lebensmittel, vor Feuchtigkeit schützt. Insgesamt wird so eine verlängerte Haltbarkeit des jeweiligen zu verpackenden Guts erzielt.

Das erfindungsgemäße Verpackungsmaterial weist bevorzugt ein Flächengewicht von 150 bis 600 g/m², insbesondere von 300 bis 500 g/m², auf. Ein derartiges Flächengewicht gewährleistet eine ausreichende Stabilität des Verpackungsmaterials gegenüber Stößen, so dass das Auftreten von Löchern in der Verpackung, die die Haltbarkeit des darin verpackten Guts beeinträchtigen könnten, bei der Handhabung im Alltag vermieden werden kann.

Das erfindungsgemäße mehrschichtige tiefziehfähige Verpackungsmaterial weist eine Recyclingfähigkeit von mehr als 13 Scoring Punkten (eingeschränkt), bevorzugt von mehr als 16 Scoring Punkten (gut) auf, ermittelt gemäß der weiter unten angegebenen Bewertung der Recyclingfähigkeit entsprechend des im Projekt mit der Nr. 530592 des bifa Umweltinstituts mit dem Projekttitel "Recyclingfähigkeit von Verpackungen" beschriebenen Verfahrens (bifa Umweltinstitut (2019): Recyclingfähigkeit von Verpackungen. Konkretisierung Untersuchungsrahmen und Kriterienkatalog. Unter Mitarbeit von Tschachtli S., Pitschke T., Kreibe S., Martin A. Hg. v. INTERSEROH Dienstleistungs GmbH. Augsburg; Online abrufbar unter: https://www.interseroh.de/fileadmin/Verpackungsoptimierung/530592_Recyclingfa ehigkeit_Bewertungskatalog_v6_3_Download.pdf, checked on 30.03.2020).

Weiterer Gegenstand der Erfindung ist ein Verfahren zur Herstellung eines mehrschichtigen tiefziehfähigen Verpackungsmaterials, umfassend die folgenden Schritte:
(a) Bereitstellen einer ersten Papierschicht;
(b) Auftragen einer Polymerschicht auf die erste Papierschicht;
(c) Verbinden der ersten Papierschicht mit der darauf aufgetragenen Polymerschicht mit einer zweiten Papierschicht, derart, dass sich die Polymerschicht zwischen der ersten und der zweiten Papierschicht befindet,
oder
(a') Bereitstellen einer zweiten Papierschicht;
(b') Auftragen einer Polymerschicht auf die zweite Papierschicht;
(c') Verbinden der zweiten Papierschicht mit der darauf aufgetragenen Polymerschicht mit einer ersten Papierschicht, derart, dass sich die Polymerschicht zwischen der ersten und der zweiten Papierschicht befindet
wobei die Polymerschicht in Schritt (b) und Schritt (b') mindestens ein wasserlösliches thermoplastisches Polymer enthält.

Für die im Zusammenhang mit dem erfindungsgemäßen Verfahren beschriebenen Merkmale gilt das für dieselben oben bereits im Zusammenhang mit dem erfindungsgemäßen Verpackungsmaterial beschriebenen Merkmale entsprechend.

Das erfindungsgemäße Verfahren zur Herstellung eines mehrschichtigen tiefziehfähigen Verpackungsmaterials sieht in Schritt (a) das Bereitstellen einer ersten Papierschicht bzw. in Schritt (a') das Bereitstellen einer zweiten Papierschicht vor. Die erste Papierschicht bzw. zweite Papierschicht kann dabei derart ausgestaltet sein, wie dies im Zusammenhang mit dem erfindungsgemäßen Verpackungsmaterial bereits ausführlich erläutert wurde. Das Bereitstellen kann beispielsweise das Herstellen des Papiers in einer Papiermaschine sowie das Einspeisen des Papiers in eine Extrusionsbeschichtungsanlage umfassen. Dabei wird das Papier nach Fertigstellung in der Aufrollpartie der Papiermaschine aufgerollt, die Papierrolle zur Extrusionsbeschichtungsanlage transportiert, in der Extrusionsbeschichtungsanlage eingespannt und kontinuierlich abgerollt.

Das erfindungsgemäße Verfahren sieht in Schritt (b) das Auftragen einer Polymerschicht auf die erste Papierschicht bzw. in Schritt (b') das Auftragen einer Polymerschicht auf die zweite Papierschicht vor, wobei die Polymerschicht in Schritt (b) und Schritt (b') mindestens ein wasserlösliches thermoplastisches Polymer enthält. Für die Ausgestaltung/en der Polymerschicht und des wasserlöslichen thermoplastischen Polymers gilt das bereits oben im Zusammenhang mit dem erfindungsgemäßen Verpackungsmaterial Gesagte. Das Auftragen der Polymerschicht kann in einer Extrusionsbeschichtungsanlage mittels Extrusion oder Co-Extrusion erfolgen.

Schritt (c) des erfindungsgemäßen Verfahrens sieht ein Verbinden der ersten Papierschicht mit der darauf aufgetragenen Polymerschicht mit einer zweiten Papierschicht vor, derart, dass sich die Polymerschicht zwischen der ersten und der zweiten Papierschicht befindet. Schritt (c') des erfindungsgemäßen Verfahrens sieht ein Verbinden der zweiten Papierschicht mit der darauf aufgetragenen Polymerschicht mit einer ersten Papierschicht vor, derart, dass sich die Polymerschicht zwischen der ersten und der zweiten Papierschicht befindet. Das Verbinden der ersten und zweiten Papierschicht gemäß Schritt (c) bzw. (c') kann gleichzeitig oder nach dem Auftragen der Polymerschicht gemäß Schritt (b) bzw. (b') erfolgen.

Gemäß einer bevorzugten Ausführungsform der Erfindung erfolgt vor oder nach Schritt (a) oder während oder nach Schritt (b) oder nach Schritt (c) oder vor oder während Schritt (c') das Auftragen einer Funktionsschicht auf die Oberseite der ersten Papierschicht, die in der späteren Anwendung Kontakt zu dem zu verpackenden Produkt hat. Dabei können als Funktionsschicht die oben im Zusammenhang mit dem erfindungsgemäßen Verpackungsmaterial genannten Funktionsschichten zum Einsatz kommen. Gemäß einer besonders bevorzugten Ausführungsform wird als Funktionsschicht eine Schicht aus einem wasserunlöslichen thermoplastischen Polymer oder einer wasserunlöslichen thermoplastischen Polymerfolie eingesetzt. Das Auftragen der Funktionsschicht kann mittels der dem Fachmann bekannten üblichen Methoden erfolgen. Bevorzugt wird die Funktionsschicht mittels (Co)extrusion oder Curtain Coating aufgetragen. Es hat sich als besonders praxisgerecht erwiesen die Funktionsschicht mittels Curtain Coating aufzutragen.

Vor oder nach Schritt (c) oder vor Schritt (a') oder nach Schritt (c') kann das Bedrucken der Unterseite der zweiten Papierschicht erfolgen, die in der späteren Anwendung die Sichtseite der Verpackung bildet. Bei Vorhandensein einer Funktionsschicht auf der Oberseite der ersten Papierschicht erfolgt das Bedrucken der Unterseite der zweiten Papierschicht bevorzugt nach dem Aufbringen der Funktionsschicht.

Schließlich ist ein Gegenstand der Erfindung auch die Verwendung des erfindungsgemäßen mehrschichtigen tiefziehfähigen Verpackungsmaterials zur Herstellung von Verpackungen, insbesondere Lebensmittelverpackungen.

Die Erfindung wird nachfolgend anhand der folgenden Figuren und Beispiele weiter erläutert.

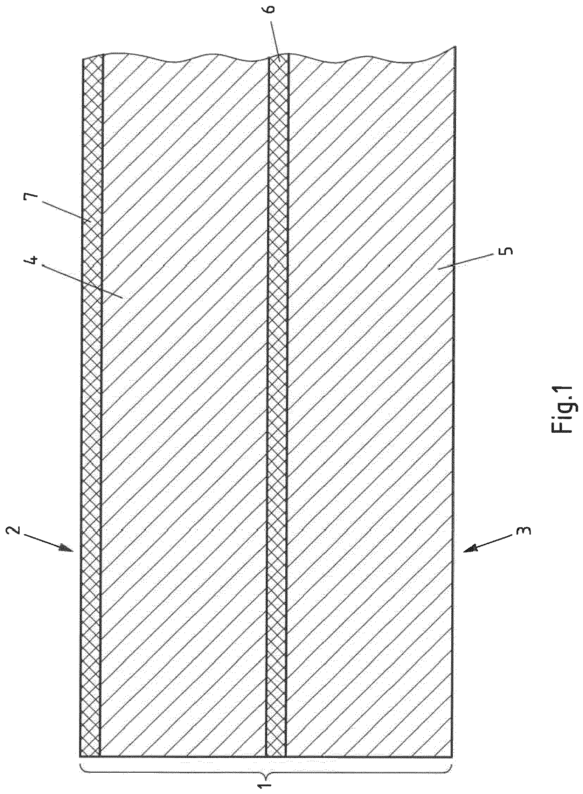

- Fig. 1: Schematische Darstellung einer Ausführungsform des erfindungsgemäßen mehrschichtigen tiefziehfähigen Verpackungsmaterials

Figur 1 zeigt schematisch eine Ausführungsform des erfindungsgemäßen mehrschichtigen tiefziehfähigen Verpackungsmaterials 1. Das erfindungsgemäße Verpackungsmaterial 1 weist eine Oberseite 2 und eine Unterseite 3 auf und umfasst eine erste Papierschicht 4 und eine zweite Papierschicht 5 sowie eine Polymerschicht 6 auf. Die Oberseite 2 ist in der späteren Anwendung in Kontakt mit dem zu verpackenden Produkt, beispielsweise einem Lebensmittel. Die Unterseite 3 ist in der späteren Anwendung die Sichtseite des Verpackungsmaterials und kann mit einem Aufdruck versehen sein. Die erste Papierschicht 4 und die zweite Papierschicht 5 weisen beispielsweise ein Flächengewicht zwischen 30 und 300 g/m² auf. Die erste Papierschicht 4 und die zweite Papierschicht 5 sind durch die Polymerschicht 6 miteinander verbunden. Die Polymerschicht weist beispielsweise ein Auftragsgewicht (atro) von 1 bis 50 g/m² auf. Die Polymerschicht 6 enthält oder besteht aus einem wasserlöslichen thermoplastischen Polymer, insbesondere einem Biopolymer. Die erste Papierschicht 4 weist auf der Oberseite eine Funktionsschicht 7 auf. Die Funktionsschicht 7 hat beispielsweise ein Auftragsgewicht (atro) von 1 bis 50 g/m² und enthält oder besteht aus einem wasserunlöslichen thermoplastischen Polymer, insbesondere PE, PP, PVOH, EVOH, PLA sowie deren Mischungen.

### Beispiel

Als lebensmittelkonformes Rohpapier wird das Produkt FibreForm 200 der Firma BillerudKorsnäs mit einem Flächengewicht von 200 g/m² eingesetzt.

Zur Herstellung eines erfindungsgemäßen Verpackungsmaterials werden die zwei lebensmittelkonformen Rohpapierbahnen mittels einer Polymerschicht eines wasserlöslichen thermoplastischen Polymers, in diesem Beispiel ein Polyvinylalkohol (Mowiflex C 30 der Firma Kuraray), in einer Extrusionsbeschichtungsanlage mittels Extrusion verbunden. Das Auftragsgewicht der Polyvinylalkoholschicht beträgt 10 g/m².

Im nächsten Schritt erfolgt der Auftrag einer Polyethylenschicht als Funktionsschicht auf der Oberseite des entstandenen Verbundmaterials mittels Extrusion. Das Auftragsgewicht der Polyethylenschicht beträgt 10 g/m².

Anschließend wird das Verbundmaterial mit der extrusionsbeschichteten Oberseite über einen speziellen glatten Kühlzylinder geleitet. Das fertige abgekühlte mehrschichtige Verpackungsmaterial wird der Extrusionsbeschichtungsanlage entnommen.

Es entsteht ein mehrschichtiges tiefziehfähiges Verpackungsmaterial mit guten Barriereeigenschaften im Kontakt mit Lebensmitteln, dass sich gut rezyklieren lässt. Insbesondere weist das Verpackungsmaterial eine Recyclingfähigkeit auf, die mindestens 16 Scoring Punkte beträgt, ermittelt nach der weiter unten dargelegten Bewertung der Recyclingfähigkeit entsprechend des im Projekt 530592 des bifa Umweltinstituts mit dem Projekttitel "Recyclingfähigkeit von Verpackungen" beschriebenen Verfahrens.

### Methoden und Normen

### Sauerstoffpermeation oder oxygen transmission rate (OTR)

Die Prüfung dient dazu, die Sauerstoffdurchlässigkeit (Permeation von reinem Sauerstoff oder aus Sauerstoffgasgemischen z. B. Luft) von Kunststoff-Folien und Kunststoff-Hohlkörpern (z. B. Verpackungsbehältnisse, Kunststoffrohre, usw.) zu bestimmen und damit ihre Eignung für Verpackungszwecke sowie für technische Anwendungen zu beurteilen. Die Prüfung erfolgt entsprechend der DIN 53380-3 und bei einer Temperatur von 23°C und einer relativen Feuchte von 50%.

### Wasserdampfpermeation oder Wasserdampfdurchlässigkeit (WDD)

Die Prüfung dient zum Bestimmen der Wasserdampfdurchlässigkeit von Kunststofffolien, Kunststoffbahnen (-platten) und Mehrschichtgebilden mit Kunststoffanteil unter Anwendung eines Elektrolysesensors. Die Prüfung erfolgt nach EN ISO 15106-3.

### Flächengewicht

Das Flächengewicht wurde ermittelt nach DIN EN ISO 536.

### Bewertung der Recyclingfähigkeit

Die Untersuchung erfolgt nach dem im Projekt 530592 des bifa Umweltinstituts mit dem Projekttitel "Recyclingfähigkeit von Verpackungen" beschriebenen Verfahren zur Bestimmung der Recyclingfähigkeit von PPK-Verpackungen (Papier, Pappe, Kartonage), PPK- Verbund und FKN (Flüssigkeitskarton) (bifa Umweltinstitut (2019): Recyclingfähigkeit von Verpackungen. Konkretisierung Untersuchungsrahmen und Kriterienkatalog. Unter Mitarbeit von Tschachtli S., Pitschke T., Kreibe S., Martin A. Hg. v. INTERSEROH Dienstleistungs GmbH. Augsburg. Online abrufbar unter: https://www.interseroh.de/fileadmin/Verpackungsoptimierung/530592_Recyclingfa ehigkeit_Bewertungskatalog_v6_3_Download.pdf, checked on 30.03.2020).

Unter Recyclingfähigkeit im Sinne dieser Prüfmethode ist die Eigenschaft eines gebrauchten oder gebrauchsfähigen Produktes aus Papier, Karton oder Pappe zu verstehen, in einer den anerkannten Regeln der Technik entsprechenden Altpapieraufbereitungsanlage so aufbereitbar zu sein, dass der erzeugte Altpapierstoff die störungsfreie und kosteneffiziente Herstellung eines qualitativ akzeptablen, altpapierhaltigen Neupapiers erlaubt.

Die Kriterien, die zur Bewertung der Recyclingfähigkeit herangezogen werden, sind:
- Zerfaserbarkeit: Massenanteil der nicht zur Papierherstellung nutzbaren Bestandteile, d.h. papierfremde Produktbestandteile und Rückstände von nicht zerfaserten Faserstoffbestandteilen. Die Bestimmung der papierfremden Produktbestandteile und der Zerfaserbarkeit erfolgt nach PTS-Methode PTS-RH 021/97, veröffentlicht durch die Papiertechnische Stiftung.
- Störungsfreie Blattbildung, d.h. keine klebenden Verunreinigungen und optischen Inhomogenitäten bzw. Sauberkeit des zur Papierherstellung nutzbaren recycelten Massenanteils. Dabei erfolgt die Prüfung auf klebende Verunreinigungen bzw. auf optische Inhomogenitäten ebenfalls nach der PTS-Methode PTS-RH 021/97.

Packmittel werden der Produktkategorie II (siehe Methode zur Bestimmung der Rezyklierbarkeit PTS-RH 021/97, veröffentlicht durch die Papiertechnische Stiftung (PTS)) zugeordnet. Diese umfasst Altpapiere, die vorwiegend für die Herstellung von Verpackungspapieren eingesetzt werden.

Die quantitative Bewertung der Recyclingfähigkeit einer Verpackung erfolgt im Rahmen eines Scoring-Modells anhand von Scoring-Punkten. Ausgangspunkt der Bewertung sind die Kriterien zur Bewertung der Recyclingfähigkeit. Für die Bewertungskriterien ist im Rahmen des Scoring-Modells eine prozentuale Gewichtung vorgegeben (siehe nachfolgende Tabelle 1), die unabhängig von der Betrachtung einer einzelnen Verpackung festgelegt ist.

Die quantitative Bewertung der Recyclingfähigkeit erfolgt in folgenden Schritten:
- Auf Basis der oben genannten Bewertungskriterien nach PTS-RH 021/97 kann für die zu untersuchende Verpackung der Erfüllungsgrad für die einzelnen Bewertungskriterien zunächst qualitativ eingeschätzt werden.
- Anhand der qualitativen Einschätzung zum Erfüllungsgrad der zu untersuchenden Verpackung erfolgt eine gestufte quantitative Bewertung (Benotung) zwischen 20 (beste Bewertung - Stufe 1) und 0 bzw. KO (schlechteste Bewertung - Stufe 5) für jedes Bewertungskriterium. Die zugrunde liegende Skalierung ist in nachfolgender Tabelle 1 dargestellt.
- Durch Multiplikation der kriterienspezifischen Bewertung der Verpackung mit der entsprechenden Gewichtung für das jeweilige Kriterium ergibt sich für jedes Kriterium ein Einzel-Scoring.
- Durch Summation über alle Einzel-Scorings ergibt sich die Gesamtbewertung der Recyclingfähigkeit, dabei gilt folgende Klassifizierung:

| Scoring Punkte | %-Anteil Untergrenze an Maximalpunktzahl (20) | Klassifizierung der Recyclingfähigkeit |
|---|---|---|
| ≥ 19 | 95% | Sehr gut |
| < 19 und > 16 | 80% | Gut |
| < 16 und > 13 | 65% | Eingeschränkt |
| < 13 und > 10 | 50% | Erheblich eingeschränkt |
| < 10 | < 50% | Mangelhaft |
| KO Bewertung in einem Kriterium | | Nicht Recyclingfähig |

Weitere Details zur Methode und den Bewertungskriterien sind in den angegebenen Publikationen zu finden.

**Tabelle 1: Scoring Modell zur quantitativen Bewertung der Recyclingfähigkeit**

| **Kriterium** | **Skalierung (Bewertung in Punkten)** | | | | | |
|---|---|---|---|---|---|---|
| | **Stufe 1** | **Stufe 2** | **Stufe 3** | **Stufe 4** | **Stufe 5** | **Stufe 5** |
| | **20** | **15** | **10** | **5** | **0** | **KO** |
| **Ebene 1: Zuordnung der Verpackung zum Erfassungssystem** | | | | | | |
| Erfassungs-system zuordenbar | Erfassungssystem für Verbraucher intuitiv problemlos zuordenbar | Erfassungssystem für Verbraucher intuitiv eingeschränkt zuordenbar | - | Erfassungssystem für Verbraucher intuitiv schwer zuordenbar | | Erfassungssystem für Verbraucher intuitiv nicht zuordenbar |
| **Ebene 2: Sortierbarkeit gemischt erfasster Verpackungen (LVP)** | | | | | | |
| Mindestgröße | Vp hat eine ausreichende Größe (deutlich > 20 mm) | - | - | Vp hat keine ausreichende Größe (deutlich <20 mm) | - | - |
| Identifizierbarke it KS, FKN, PPK-Verbund, PPK, Glas (Oberflächeneige nschaft) | Detektion Zielmaterial uneingeschränkt möglich oder Sonderfall formflexibler Kunststoff | Detektion Zielmaterial eingeschränkt | Detektion Zielmaterial deutlich eingeschränkt | - | Detektion Ziel material nicht möglich | - |
| **Ebene 3: Eignung für werkstoffliche Verwertung und Bereitstellen von Sekundärprodukten** | | | | | | |
| Hochwertigkeit Verwertungsweg | Erwarteter Verwertungsweg ist hochwertig | Erwarteter Aufbereitungsweg ist überwiegend hochwertig | Erwarteter Aufbereitungsweg ist nur zum Teil hochwertig | | | Erwarteter Verwertungsweg Zielmaterial ausschließ], |
| | werkstofflich | werkstofflich | werkstofflich | | | energetisch bzw. nur im Einzelfall hochwertig werkstofflich |
| Abtrennbare, nicht verwertbare Anteile | Vp enthält keine abtrennbaren, nicht verwertbaren Anteile | Vp enthält geringe Anteile (< 10 Massen-%) | Vp enthält signifikante Anteile (> 10 Massen-% und < 30 Massen-%) | Vp enthält erhebliche Anteile (> 30 Massen-%) | - | Vp wird vollständig aus der Zielfraktion abgetrennt |
| Nicht abtrennbare Anteile bzw. Verunreinigunge n | Vp trägt keine störenden Verunreinigungen | Vp trägt ein oder zwei unterschiedliche Art/en an Verunreinigung mit geringem Kontaminationsrisiko ein | Vp trägt drei oder mehr unterschiedliche Arten an Verunreinigungen mit geringem Kontaminationsrisiko ein | Vp trägt eine oder zwei unterschiedliche Art/en an Verunreinigungen mit hohem Kontaminationsrisiko ein | Vp trägt drei (oder mehr) unterschiedliche Arten an Verunreinigunge n mit hohem Kontaminationsr isiko ein | Vp trägt störende Verunreinigungen ein, die die Recyclingfähigkeit ausschließen |

### E-Modul

Der E-Modul wird gemäß der Zugfestigkeitsprüfung mit dem Lorentzen & Wettre Tensile Tester bestimmt. Hierzu werden Muster der Kunstharzschicht auf 50 mm Breite und 120 mm Länge zugschnitten. Die Messlänge ist auf 100 mm festgelegt. Die Messgeschwindigkeit beträgt 100 mm/min. Dicke und Flächengewicht der Proben werden bestimmt und ins Prüfprogramm "E-Modul" des Lorentzen & Wettre Tensile Testers aufgenommen. Die Zugfestigkeitsprüfung erfolgt dann an den Proben. Das E-Modul wird aus dem Verhältnis zwischen mechanischer Spannung und Dehnung im linearen Bereich des Spannungs-Dehnungs-Diagramms ermittelt.

### Tiefziehbarkeit

Die Beurteilung der Tiefzieh- und Versiegelbarkeit erfolgte an einer Tiefziehmaschine vom Typ Tiromat 3000 der Fa. Alfa Laval. Die Folien wurden bei einer Tiefziehtemperatur von 110°C geformt, d. h. eine Beheizung erfolgte durch Kontakt mit einer auf 110°C temperierten Heizplatte. Die Versiegelung wurde bei einer Temperatur von 140°C über eine Zeit von 1,5 Sekunden durchgeführt. Es wurde notiert, ob auf der Folie ein Heizplattenabdruck zu erkennen war und ob die Versiegelung gegen Papier ausreichend hoch war, so dass sich die Papierbahn nicht versehentlich von der Folie lösen konnte.

## Patentansprüche

1. Mehrschichtiges tiefziehfähiges Verpackungsmaterial mit einer Ober- und einer Unterseite, umfassend mindestens eine erste und eine zweite Papierschicht und mindestens eine Polymerschicht, wobei die mindestens eine erste und eine zweite Papierschicht durch die mindestens eine Polymerschicht miteinander verbunden sind, **dadurch gekennzeichnet, dass** die mindestens eine Polymerschicht mindestens ein wasserlösliches thermoplastisches Polymer enthält.

2. Mehrschichtiges tiefziehfähiges Verpackungsmaterial nach Anspruch 1, **dadurch gekennzeichnet, dass** die mindestens eine erste und zweite Papierschicht ein Flächengewicht von 30 bis 300 g/m², insbesondere von 60 bis 250 g/m², besonders bevorzugt von 100 bis 220 g/m², aufweisen.

3. Mehrschichtiges tiefziehfähiges Verpackungsmaterial nach Anspruch 1 oder 2, **dadurch gekennzeichnet, dass** das Auftragsgewicht (atro) der mindestens einen Polymerschicht im Bereich von 15 bis 50 g/m², insbesondere im Bereich von 10 bis 30 g/m², liegt.

4. Mehrschichtiges tiefziehfähiges Verpackungsmaterial nach einem der vorhergehenden Ansprüche, **dadurch gekennzeichnet, dass** das mindestens eine wasserlösliche thermoplastische Polymer im pH-Bereich von 3 bis 11 bei 20±5 °C und 1013,25 hPa eine Wasserlöslichkeit von mindestens 25 % (m/m) Polymer in Wasser aufweist.

5. Mehrschichtiges tiefziehfähiges Verpackungsmaterial nach einem der vorhergehenden Ansprüche, **dadurch gekennzeichnet, dass** das mindestens eine wasserlösliche thermoplastische Polymer ein E-Modul von mindestens 0,8 GPa aufweist.

6. Mehrschichtiges tiefziehfähiges Verpackungsmaterial nach einem der vorhergehenden Ansprüche, **dadurch gekennzeichnet, dass** das mindestens eine wasserlösliche thermoplastische Polymer ein Biopolymer, insbesondere ein Biopolymer ausgewählt aus modifizierten und natürlichen Biopolymeren, ist.

7. Mehrschichtiges tiefziehfähiges Verpackungsmaterial nach Anspruch 6, **dadurch gekennzeichnet, dass** das Biopolymer ausgewählt ist aus der Gruppe bestehend aus Polysacchariden, insbesondere thermoplastische Stärke (TPS), Polylactiden (PLA), Polyhydroxybutyraten (PHB), thermoplastischen Polymeren auf Ligninbasis, Polyvinylalkoholen oder Ethylen-Vinylacetat-Copolymeren (EVOH) auf Basis nachwachsender Rohstoffe sowie deren Mischungen.

8. Mehrschichtiges tiefziehfähiges Verpackungsmaterial nach einem der vorhergehenden Ansprüche, **dadurch gekennzeichnet, dass** das Verpackungsmaterial eine Recyclingfähigkeit von mehr als 13 Scoring Punkten, bevorzugt von mehr als 16 Scoring Punkten, aufweist, ermittelt gemäß des im Projekt mit der Nr. 530592 des bifa Umweltinstituts mit dem Projekttitel "Recyclingfähigkeit von Verpackungen" beschriebenen Verfahrens..

9. Mehrschichtiges tiefziehfähiges Verpackungsmaterial nach einem der vorhergehenden Ansprüche, **dadurch gekennzeichnet, dass** der Anteil an Papier im Verpackungsmaterial größer als 80 Gew.-%, bevorzugt größer als 90 Gew.-%, besonders bevorzugt größer als 95 Gew.-%, bezogen auf das Gesamtgewicht des Verpackungsmaterials, beträgt.

10. Mehrschichtiges tiefziehfähiges Verpackungsmaterial nach einem der vorhergehenden Ansprüche, **dadurch gekennzeichnet, dass** die Sauerstoffpermeation des Verpackungsmaterials nicht mehr als 15 cm³/m² in 24 Stunden, gemessen nach DIN 53380-3 bei einer Temperatur von 23°C, 50% relativer Luftfeuchtigkeit und einem Luftdruck von 1 atm, beträgt.

11. Mehrschichtiges tiefziehfähiges Verpackungsmaterial nach einem der vorhergehenden Ansprüche, **dadurch gekennzeichnet, dass** die Wasserdampfpermeation des Verpackungsmaterials nicht mehr als 50 g/m² in 24 Stunden, gemessen nach EN ISO 15106-3 bei einer Temperatur von 23°C, 50% relativer Luftfeuchtigkeit und einem Luftdruck von 1 atm, beträgt.

12. Verfahren zur Herstellung eines mehrschichtigen tiefziehfähigen Verpackungsmaterials, umfassend die folgenden Schritte:
(a) Bereitstellen einer ersten Papierschicht;
(b) Auftragen einer Polymerschicht auf die erste Papierschicht;
(c) Verbinden der ersten Papierschicht mit der darauf aufgetragenen Polymerschicht mit einer zweiten Papierschicht, derart, dass sich die Polymerschicht zwischen der ersten und der zweiten Papierschicht befindet,
oder
(a') Bereitstellen einer zweiten Papierschicht;
(b') Auftragen einer Polymerschicht auf die zweite Papierschicht;
(c') Verbinden der zweiten Papierschicht mit der darauf aufgetragenen Polymerschicht mit einer ersten Papierschicht, derart, dass sich die Polymerschicht zwischen der ersten und der zweiten Papierschicht befindet,
wobei die Polymerschicht in Schritt (b) mindestens ein wasserlösliches und thermoplastisches Polymer enthält.

13. Verfahren zur Herstellung eines mehrschichtigen tiefziehfähigen Verpackungsmaterials gemäß Anspruch 12, wobei vor oder nach Schritt (a) oder während oder nach Schritt (b) oder nach Schritt (c) oder vor oder während Schritt (c') das Auftragen einer weiteren Polymerschicht auf die Oberseite der ersten Papierschicht, die in der späteren Anwendung Kontakt zu dem zu verpackenden Produkt hat, umfassend mindestens ein wasserlösliches thermoplastisches Polymer, ausgewählt aus PVOH, EVOH sowie deren Mischungen, erfolgt.

14. Verfahren zur Herstellung eines mehrschichtigen tiefziehfähigen Verpackungsmaterials gemäß einem der Ansprüche 12 oder 13, wobei vor oder nach Schritt (c) oder vor Schritt (a') oder nach Schritt (c') das Bedrucken der Unterseite der zweiten Papierschicht erfolgt, die in der späteren Anwendung die Sichtseite der Verpackung bildet.

15. Verwendung des mehrschichtigen tiefziehfähigen Verpackungsmaterials nach einem der Ansprüche 1 bis 11 zur Herstellung von Verpackungen, insbesondere Lebensmittelverpackungen.
